# EUROPEAN PATENT SPECIFICATION

(11) **EP 2 115 055 B1**
(45) Date of publication and mention of the grant of the patent: **18.03.2015**
(21) Application number: 08724423.2
(22) Date of filing: 07.01.2008
(51) Int. Cl.: C08K 3/00, C08K 3/34, C08K 3/36, C08K 7/26

(54) **COMPOSITES COMPRISING POLYMER AND MESOPOROUS SILICATE**
VERBUNDMATERIAL MIT POLYMER UND MESOPORÖSES SILIKAT
COMPOSITES CONTENANT UN POLYMÈRE ET DES SILICATES MÉSOPOREUX

(30) Priority: 05.01.2007 US 878857 P
(43) Date of publication of application: 11.11.2009
(73) Proprietor: Board of Trustees of Michigan State University, East Lansing, MI 48824-1046 (US)
(72) Inventor: PINNAVAIA, Thomas, J., East Lansing, MI 48823 (US); PARK, In, Seoul 137-771 (KR); XUE, Siqi, Zhenjiang, Jiangsu 212003 (CN)
(74) Representative: Novagraaf Technologies
(86) International application number: PCT/US2008/000191
(87) International publication number: WO 2008/085939

(56) References cited:
- WO-A-01/78925
- DE-A1- 3 632 865

## Description

### CROSS-REFERENCE TO RELATED APPLICATIONS

This application claims the benefit of U.S. Provisional Application No. 60/878,857, filed on January 5, 2007. The disclosure of the above application is incorporated herein by reference.

### BACKGROUND

Composites have been around almost since the invention of polymer materials. Conventional composites use micron-scaled fillers, such as talc, glass fibers and carbon fibers, to reinforce polymers or simply to fill the volume. Conventional composites usually exhibit significantly weakened strength and elongation at break, although modulus can be improved. A newly emerging technique in composite fabrication is called nanocomposite where fillers either have intrinsic nanometer dimensions or are forced to dissociate into nanoparticles. Compared with conventional composites, nanocomposites have enhanced dispersion, large contact surface areas and better interaction between the polymer matrices and fillers. Therefore, improvements in materials properties can be achieved in these nanocomposites even at low filler loadings. In the following content, we will mainly compare our invention with the nanocomposite approaches.

A common filler material used in nanocomposite is smectic clay minerals. Natural clay minerals have a stacked nanolayer morphology. They need to be modified by organic cations, such as long-chain alkyl ammonium cations, via ion-exchange reactions to expand the gallery spacing between clay layers to facilitate exfoliation during nanocomposite preparation. Organoclays suitable for nanolayer exfoliation in an engineering polymer matrix can contain 20 wt% or more organic modifier. For polyolefins, extra modification for the polymer matrices is needed to improve polymer - clay compatibility and, consequently, to achieve polymer reinforcement. However, organic modifiers compromise the benefit of clay by lowering the strength and thermal stability of the composites, since the modifiers usually have much lower molecular weight than polymers. The use of modifiers increases the fabrication cost and makes the nanocomposite systems more complex and more difficult to build.

Another extensively studied nanoparticle for polymer reinforcement is carbon nanotubes. Carbon nanotubes have superb properties in mechanical properties, electrical conductivities, and thermal stability and conductivity. However, its application for polymer composites is currently limited by the lack of ability to synthesize high-quality, low-cost, uniform carbon nanotubes on a large scale, and the lack of ability to control the chirality and the wall thickness and tube length dimensions. Carbon nanotubes require organic modification to be compatible with most polymers. However, an effective strategy for the reinforcement of polymers by carbon nanotubes without the need for surface modification of the tubes composite fabrication has yet to be found.

Silicas and silicates have also been used to reinforce polymers. In general, these silicas and silicates are either non-porous spherical silica nanoparticles or mesoporous silicas and silicates with small pore sizes that require surface organic modification or intensive processing methods to achieve particle dispersion and polymer reinforcement.

Previous attempts to improve the mechanical and permeability properties of a polymer using mesoporous silica as an adjuvant required the use of up to 30 mole percent organic surface modifiers and particle loading of 28 wt % to achieve meaningful reinforcement.

All in all, previous attempts to use three-dimensional mesostructured silica as a polymer reinforcing agent have not demonstrated mechanical improvements comparable to those achieved with exfoliated organoclays. For instance, Nylon 6, 6 composites containing high levels -35% (w/w) - of a mesostructured silica denoted FSM (pore size of only 2.7 nm) exhibited only a two-fold increase in modulus. Polypropylene filled with MCM-41 (average pore size less than 4 nm in diameter) composites prepared with aid of supercritical CO₂ have been reported, but only a few percents of reinforcement were observed in tensile properties.

Spherical silica nanoparticles (non-porous) also have been used to reinforce polymers. However, only a limited improvement in mechanical properties was observed at very low silica loading (0.75 vol%), and the properties went down at higher silica loadings.

In another aspect, polymer-smectic clay nanocomposites, first demonstrated for a Nylon-6 polymer, have attracted much research interest over the past decade. When the clay nanolayers are fully dispersed in the polymer matrix, significant improvements in mechanical strength, thermal stability, barrier properties, and other properties can be realized at low clay loadings (< 10 wt%). Naturally occurring smectite clays have poor wetting properties when combined with a water-insoluble polymer or polymer precursor due to incompatible surface polarity. In order to achieve exfoliation of the clay nanolayers in the polymer matrix, it is necessary to replace the inorganic exchange cations on the clay basal surfaces with alkylammonium or other organic cations. The organocations enlarge the galley space between stacked nanolayers, lower the polarity of the surface and allow for the intercalation of polymer between nanolayers. Under appropriate though often stringent processing conditions, complete exfoliation of the nanolayers into the polymer matrix can be achieved.

Another drawback of clay organic modification is the limited thermal stability of the organic modifier and the tendency of the modifier to function as a plasticizer that can compromise tensile properties. The thermal instability of the modifier places limits on the processing temperature for dispersing the clay particles in the polymer matrix. Modifiers that require a lower than normal processing temperature can lengthen the compounding time, thus, causing a reduction in manufacturing efficiency. Even when thermal decomposition is avoided, the modifier can function as a plasticizer and reduce the glass transition temperature of the polymer.

### SUMMARY

In various embodiments, compositions and methods are provided for using surfactant-templated mesoporous silicates and mesoporous layered silicate clays having certain porosity parameters for polymer reinforcements to make composites. The combination of porosity parameters that allows mesoporous silicates to be competitive with organoclays for the reinforcement of engineering polymers are:
- An average mesopore size of at least 4 nm for surfactant-templated mesoporous silicates and least 2 nm for mesoporous layered silicate clays
- A specific surface area of at least 400 square meters per gram and
- A total pore volume of at least 1.0 cubic centimeter per gram.

The inorganic mesoporous silicates effective in providing polymer reinforcement comparable to organoclays are characterized by a pore volume of 1 cm³ or greater, a surface area of at least 400 m²/g, an average pore diameter of 4 nm or greater for surfactant templated silicates and an average pore diameter of 2 nm or greater for mesoporous silicate clays with disordered nanolayer aggregation. In addition, at least 20% of the total pore volume is due to the presence of mesopores having a diameter of 2 nm to 50 nm. It has been surprisingly found that such mesoporous silicates can be formulated into engineering polymers at low levels (e.g. 1-12% by weight) and without the need to use organic modifiers to provide composites having enhanced tensile properties comparable to those of composites filled with conventional organoclay reinforcing agents.

In various embodiments, the mesoporous silicates useful here include mesoporous silica compositions known as "surfactant-templated silicates" synthesized in the presence of micellar surfactant templates, wherein the surfactant micelles serve as mesoporogens. In the "as-made" form, the mesoporous silicates contain surfactant in the pores. The subsequent removal of the surfactant through solvent extraction or calcination yields the silicate in surfactant-free mesoporous form.

The surfactant-templated silicates have mesopore networks that are ordered or disordered. Mesopore networks that are connected in three dimensions are preferred over mesopore networks that are one- or two-dimensional.

Suitable surfactant-templated mesoporous silicates include mesocellular foam-structured mesoporous silica (e.g., MSU-F silica), wormhole-structured mesoporous silica (e.g., MSU-J silica; HMS silica) and lamellar mesoporous silica (e.g., MSU-V, MSU-G), wherein the pore network extends not only parallel to the lamellae but also orthogonal to the lamellae owing to surface-templated pores that permeate the lamellae. Still further, ordered mesoporous silicates with hexagonal or cubic pore networks are suitable as polymer reinforcing agent provided they possess the appropriate combination of mesopore size, surface area, and total pore volume as described in this invention. In general, the symmetry of the pore network is determined by the nature of the surfactant used as a template and the reaction conditions used to form the mesoporous silicate.

In other embodiments, suitable silicates also include mesoporous synthetic layered silicate clays, wherein the mesopores are formed through the disordered aggregation of silicate nanolayers, wherein the nanolayers are atomically ordered (crystalline) in a manner analogous to smectite clays. However, unlike conventional clays wherein the nanolayers stack layer-upon-layer to form tactoids with a deck-of-cards structure that lacks significant mesoporosity, mesoporous layered silicate clays form tactoids through the disordered aggregation of nanolayers involving layers disposed edge-to-face at the expense of nanolayer stacking. This "cardhouse" arrangement of nanolayers gives rise to mesoporosity and surface area useful in providing polymer reinforcement properties.

Surfactant-templated mesoporous silicates and mesoporous silicate clays formed through the disordered aggregation of synthetic silicate clay nanolayers are further characterized in terms of pore structure and the nature of the pore walls. For example, some surfactant-templated mesoporous silicates are characterized by "wormhole" mesostructures that have intersecting channellike pores, while others are classifiable as mesocellular foam silicates that have cage-like pores connected by windows, depending on the nature of the surfactant used and the method of synthesis. On the other hand, the mesoporous layered silicate clays have cardhouse-like pores as discussed above. In various embodiments, surfactant-templated mesoporous silicates have pore walls that are atomically disordered (amorphous), whereas the pore walls of synthetic mesoporous smectite clays are atomically ordered (crystalline). Despite the diversity of pore properties and structures, both types of silicate materials share a set of porosity properties that makes them readily suited for polymer intercalation inside the pores.

It is preferred, though not required, that the mesopores be interconnected in three dimensions, as this allows for more facile penetration of the mesopores by the polymer or polymer precursor (prepolymer) and better reinforcement through interactions of the polymer with the pore walls. Therefore, great reinforcement can be achieved in the composites, without the use of organic modifiers.

In various embodiments, use of mesoporous silicates as described herein provides one or more of the following advantages:
- The need for organic modifiers analogous to those used for the dispersion of smectite clay nanolayers in polymer matrices is eliminated. Therefore, the composite processing is more concise and cost efficient. Whereas a smectite clay requires 20 wt% or more organic modifier for dispersion in an engineering polymer, the mesoporous silicates of the present invention require no organic modifiers, though conventional organophosphate and organosilane pigment and filler dispersing agents at the 1 - 2 wt% level can use used to facilitate dispersion.
- The composites based on thermoplastic polymers such as polyolefins and mesoporous silicates can be achieved via melt-blending, which is compatible with the industrial composite processing standards.
- The composites based on thermoset polymers (such as epoxy) and silicates can be achieved via simply mixing and curing.
- Mesoporous silicates provide reinforcement to the mechanical properties of polymers that is analogous to organoclay but avoids the cost and processing limitations of an organic modifier. In some cases, depending on the nature of the polymer, it may be advantageous to use an organic surface modifier in the form of a dispersing agent to promote the dispersion of the mesoporous silica or silicate, but in general the amount of needed organic modifier will be far lower than the amount needed to disperse a conventional clay mineral in the polymer matrix.
- The composites exhibit improvement in thermal stability and permeability.
- Suitable mesoporous silicates can be readily synthesized on large scales with control of the product morphology.
- Silicas and silicates are light (low density) materials. Therefore, the addition of silicas and silicates will not add the weight to the polymers.
- Silicas and silicates are environmentally friendly.

The methods and compositions described herein can be applied to many engineering thermoplastic or thermoset polymers, especially for the fabrication of high-strength high-modulus composites. These composites have promising application in automobiles, construction materials, etc. These composites may also be used in membrane fabrications.

### BRIEF DESCRIPTION OF THE DRAWINGS

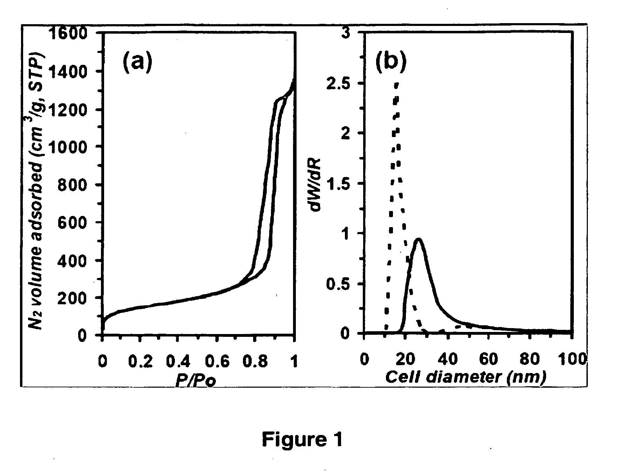

Figure 1 shows a) nitrogen adsorption-desorption isotherm for calcined MSU-F silica foam prepared from post-synthesis hydrothermal treatment of the as-synthesized MSU-F for 24 h at 100°C; and b) corresponding cell size (solid line) and window size (dash line) distributions obtained from adsorption and desorption branches, respectively.

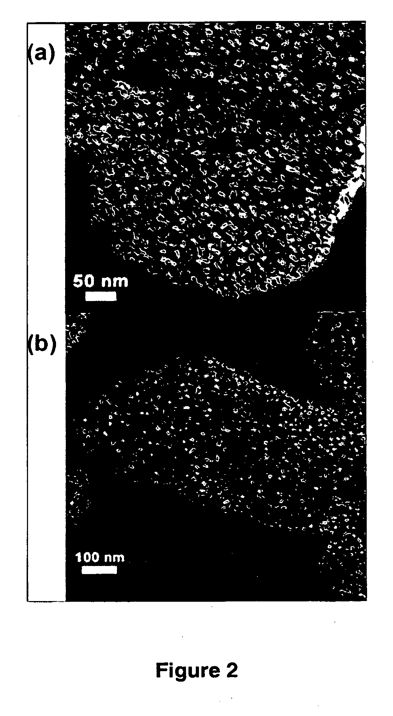

Figure 2 shows transmission electron microscopy (TEM) images at two magnifications for calcined MSU-F mesocellular silica foam synthesized at 100°C.

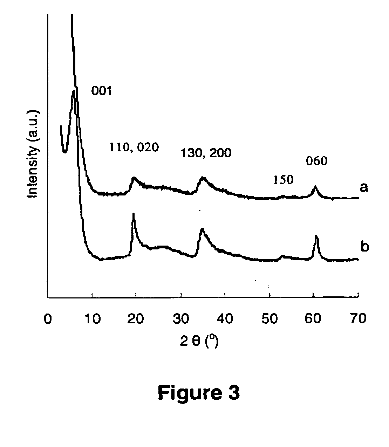

Figure 3 shows wide angle hkl X-ray reflections of (a) synthetic mesoporous sodium- saponite clay (SAP) crystallized at 90°C and (b) non-mesoporous synthetic saponite clay made at 200°C.

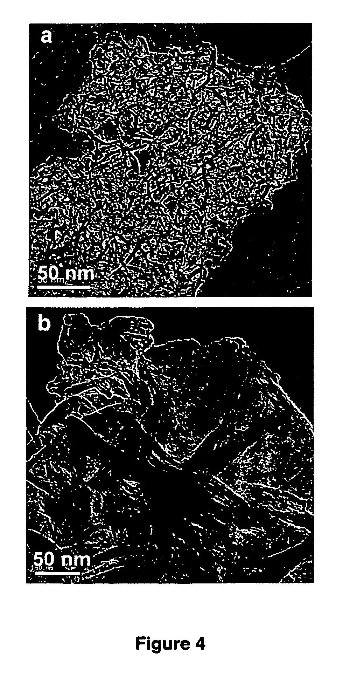

Figure 4 shows TEM images of (a) synthetic mesoporous saponite prepared at 90°C, wherein there is little or no stacking of nanolayers and disordered aggregation of the nanolayers though edge (dark high contrast regions) to face (light low contrast regions) and (b) a synthetic saponite of the same composition prepared at 200°C, wherein the nanolayers are aggregated through regular face-to-face stacking.

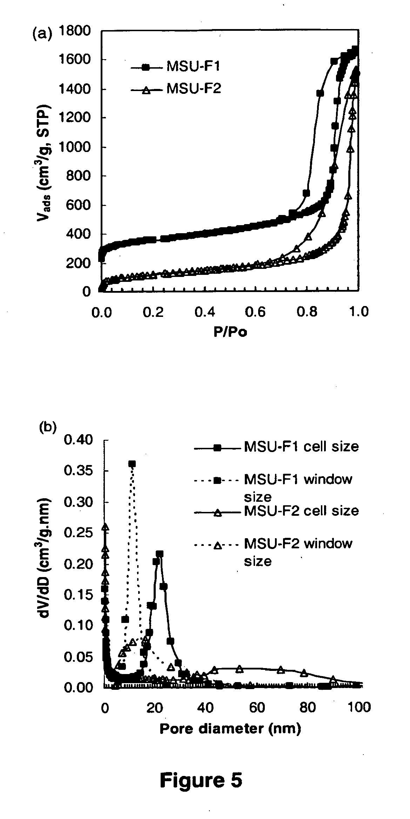

Figure 5(a) gives the N₂ adsorption-desorption isotherms of MSU-F1 and MSU-F2. The curves are offset by 200 for clarity. Figure 5(b) gives a cell size (solid lines) and window size (dash lines) distribution of MSU-F1 and MSU-F2 obtained from the adsorption and desorption isotherm curves, respectively. The distributions were determined by applying BJH model.

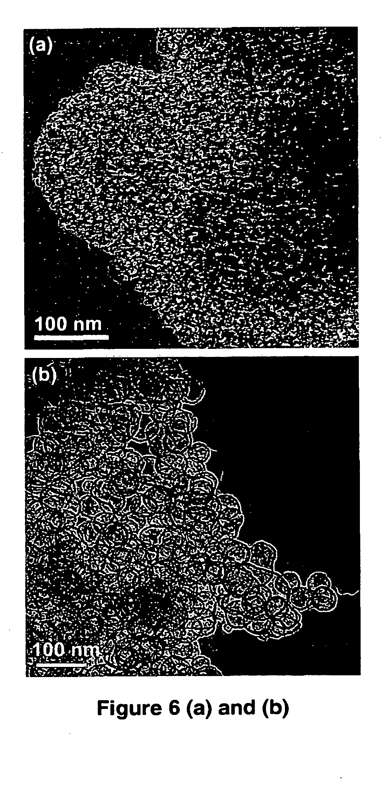

Figure 6 shows TEM images of (a) MSU-F1 and (b) MSU-F2.

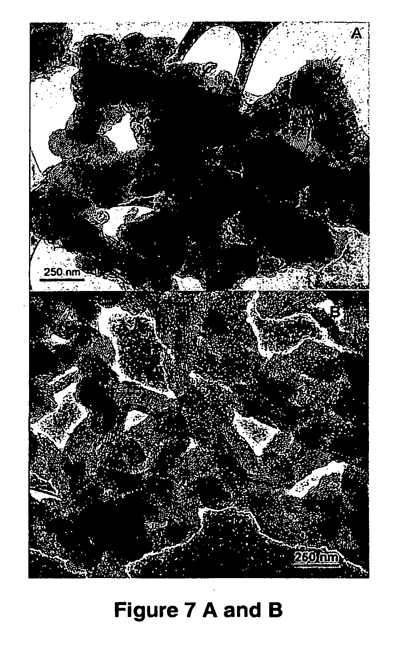

Figure 7 shows TEM images of the calcined forms of mesoporous (A) hexagonal MSU-H-333 and (B) hexagonal MSU-H-333P silica showing, in addition to surfactant templated framework pores, textural meso- and macropores formed by the intergrowth of domains of surfactant-templated mesoporous silica. The average surfactant-templated framework mesopore size, specific surface area and total pore volume, respectively, are (A) 10.2 nm, 870 m²/g, 1.25 cm³/g and (B) 11.9 nm, 530 m²/g, 1.35 cm³/g. The textural pores in these images range from about 10 nm to 250 nm.

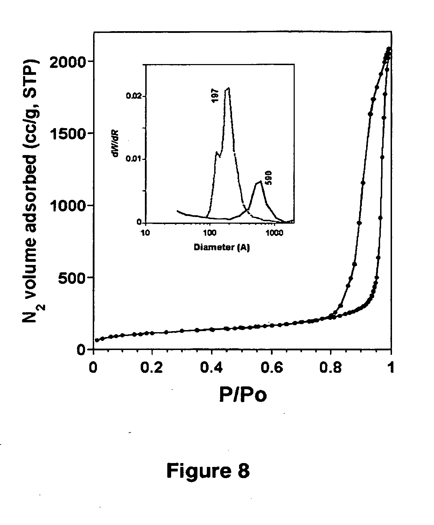

Figure 8 shows a nitrogen isotherm of a mesocellular foam silica wherein the average mesopore size is 59 nm, the specific surface area is 408 m²/g, and the total pore volume is 3.23 cm³/g and wherein at least 20% of the total pore volume is due to the presence of mesopores 2 to 50 nm in size.

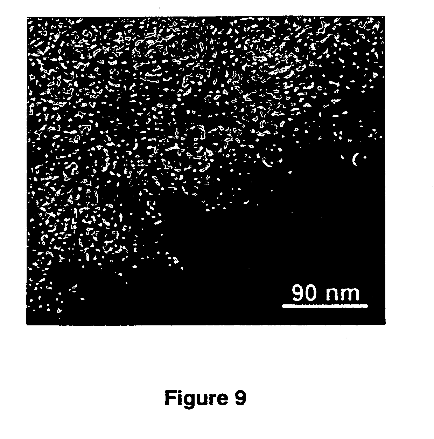

Figure 9 is a TEM image of a lamellar mesoporous MSU-G silica with a hierarchical vesicle morphology wherein the average pore size is 4.6 nm, the specific surface area is 557 m²/g, and the total pore volume is 1.12 cm³/g.

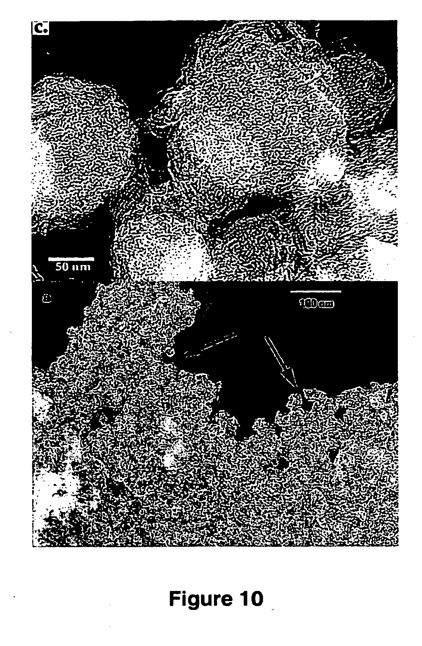

Figure 10 shows TEM images at two magnifications of a mesoporous silica with a wormhole framework structure containing textural mesopores (identified by arrows in low magnification image and by the dark contrast regions in the higher magnification image) in addition to the surfactant-templated framework mesopores with a average diameter of 4.5 nm and a surface area of 900 m²/g. The total pore volume of this example (1.67 cm³/g) is distributed between the framework pores (0.67 m²/g) and the textural mesopores (1.0 cm³/g).

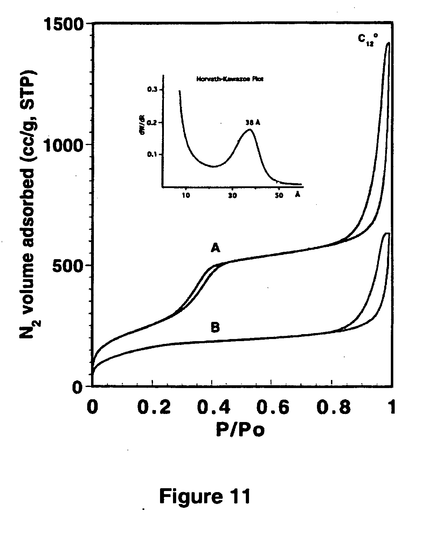

Figure 11 shows (A) nitrogen adsorption-desorption isotherm for the calcined mesoporous wormhole mesoporous silica described in Figure 10 after calcination at 650°C; and (B) nitrogen adsorption-desorption isotherm for the same mesoporous silica after calcination at 1000°C, showing the collapse of the wormhole framework pore volume at this calcination temperature, but the retention of some of the textural mesopores.

### DESCRIPTION

The definition of terms used in this invention, as well as in the journal literature, are provided as follows:

SILICATE: A solid compound containing silicon covalently bonded to four oxygen centers to form tetrahedral SiO₄ subunits. One or more oxygen atoms of the subunit may bridge to one or more metal centers in the compound. Thus, one or more other elements may be combined with oxygen and silicon to form a silicate. The solid may be atomically ordered (crystalline) or disordered (amorphous). Silica in hydrated form (empirical formula SiO₂ x H₂O, where x is a number denoting the equivalent water content of the composition) or dehydrated form (empirical formula SiO₂) is included in the definition of this term.

AN ATOMICALLY ORDERED or CRYSTALLINE SOLID: Refers to a solid in which atoms are arranged on lattice points over a length scale effective in producing Bragg reflections in the wide angle region of the X-ray powder diffraction pattern of the solid which correspond to basal spacings less than 2 nm. Atomically disordered or amorphous solids lack the wide angle diffraction features of a crystalline solid.

WIDE ANGLE DIFFRACTION: refers to the Bragg diffraction features appearing in the two theta region of an X-ray powder diffraction pattern corresponding to one or more basal spacings less than 2 nm in magnitude. Bragg reflections in this region of the diffraction pattern indicate the presence of atomically ordered (crystalline) matter wherein atoms are located on lattice points.

A POROUS SOLID AND SOLIDS WITH ORDERED AND DISORDERED PORES: A porous solid contains open spaces (pores) that can be accessed and occupied through sorptive forces by one or more guest species of molecular dimensions. The said pores may be contained within a single particle of the solid or between aggregates of particles. The pores may be ordered in space and give rise to one or more Bragg reflections in the small angle region of the X-ray powder diffraction pattern, in which case the solid is said to be an "ordered" porous material. If the ordered pores have an average diameter in the mesopore range of 2 - 50 nm, the solid is said to be an "ordered mesoporous solid" or "mesostructured" and the ordered pores are said to be "framework" mesopores. If the solid is mesoporous but no Bragg reflections are present in the small angle region of the X-ray diffraction pattern of the compound, the solid is a "disordered mesoporous solid" and the disordered mesopores are said to be "textural mesopores".

TOTAL PORE VOLUME: For the purposes of this invention the total pore volume per gram of mesoporous solid (also known as the specific pore volume) is taken to be equal to the volume of liquid nitrogen that fills pores at the boiling point of liquid nitrogen and a partial pressure of 0.99. The pore volume under these conditions is taken from the adsorption branch of the nitrogen adsorption - desorption isotherms of the solid after it has been out-gased under vacuum (10⁻⁶ torr) at 150 °C for a period of 24 hours for the purpose of removing adsorbed water from the pores. One cubic centimeter of liquid nitrogen at the boiling point of nitrogen is equal to 645 cubic centimeters of gaseous nitrogen at standard temperature and pressure (STP).

SURFACE AREA: The surface area per gram of mesoporous solid (also known as the specific surface area) is obtained by fitting the Brunauer-Emmet-Teller or BET equation to the nitrogen adsorption isotherm for the solid at the boiling point of nitrogen.

AVERAGE MESOPORE SIZE: The average mesopore size of a mesoporous solid is determined from the pore size distribution obtained from the adsorption branch of the nitrogen adsorption - desorption isotherms using the Horvath - Kawazoe or HK model (Horvath, G.; Kawazoe, K. J. J. Chem. Eng. Jpn. 1983, 16, 470) or the Barrret-Joyner-Halenda or BJH model for the filling of mesopores. [Barrett, E. P.; Joyner, L. G.; Halenda, P. P. J. Am. Chem. Soc. 1951, 73, 373]. In the case of mesocellular foam silicas, the BJH as well as the modified Broekhoff-deBoer model (BdB-FHH2) [W. W. Lukens, P. Schmidt-Winkel, D. Y. Zhao, J. L. Feng, G. D. Stucky, Langmuir 1999, 15, 5403] is used to obtain the mesopore size distribution and average mesopore size. There are many alternative models for obtaining pore size distributions from nitrogen adsorption isotherms with varying degrees of claimed accuracy, but the above models are commonly used in the literature and are reasonable approximations of mesopore size.

MESOPOROUS SOLID: A mesoporous solid is one that contains pores with an average diameter between 2.0 and 50 nm. A mesoporous solid may also contain so-called micropores with an average diameter less than 2.0 nm, as well as so-called macropores with an average diameter greater than 50 nm. For the purpose of this invention the solid is mesoporous if at least 20% of the total pore volume is due to the presence of pores with an average diameter between 2.0 and 50 nm.

MESOSTRUCTURED: refers to a structured form of a solid wherein the element of structure repeats on a mesometric length scale between 2 - 50 nm, resulting in the presence of at least one Bragg reflection in the small angle X-ray powder diffraction pattern of the solid. The repeating element of structure may be atomically ordered (crystalline) or disordered (amorphous). In the case of ordered meosoporous (mesostructured) solids, the pores and pore walls represent the element of structure that gives rise to Bragg reflections in the small angle X-ray diffraction pattern of the solid.

SMALL ANGLE DIFFRACTION: refers to the Bragg diffraction features in the two theta region of an X-ray powder diffraction pattern corresponding to one or more basal spacings greater than 2.0 nm in magnitude.

MESOCELLULAR SILICA FOAM: a surfactant templated mesoporous silicate composition wherein the porosity results from the presence of silicate struts that define cage-like cellular pores connected by windows (pore openings) and wherein the average diameter of the windows is smaller than the average diameter of the cages. Examples include silica compositions denoted MCF silica and MSU-F silica in the scientific literature.

WORMHOLE FRAMEWORK or WORMHOLE MESOSTRUCTURE: A surfactant-templated mesostructured solid wherein the porosity results from the presence of intersecting, channellike intra-particle pores with a pore-to-pore correlation distance effective in providing at least one Bragg diffraction feature in the small angle X-ray powder diffraction pattern of the solid. Examples include silica compositions denoted in the literature as HMS silica and MSU-J silica.

MESOPOROUS LAYERED SILICATE CLAY: A synthetic crystalline layered silicate clay mineral composition wherein the mesopores are formed through the disordered aggregation of unstacked clay nanolayers approximately 1 nm in thickness.

ORDERED MESOPOROUS LAYERED SILICATE: A surfactant-templated silicate wherein the small angle Bragg reflections arise from lamellar units of structure and the mesoporosity arises in part from the presence of pores between the layers, as well as pores that penetrate the layers. Depending on the surfactant used to template the pore network, the layers in some derivatives close upon themselves forming hierarchical vesicles with single layer and mutilayer vesicle walls. Examples of mesoporous layered silicates include MSU-G and MSU-V silica.

ENGINEERING POLYMER: in one aspect refers to an organic polymer composition in elastic or rigid form and wherein the composition is moldable into a film, sheet, pellet or structural part.

In one embodiment, a composite composition is provided that contains an organic polymer and a mesoporous silicate. The mass ratio of polymer to silicate in the composite is from 99:1 to 50:50. The mesoporous silicate is characterized by mesoporosity parameters that give the composite enhanced physical properties and permit the composite to be made simply and without the use of organic modifiers. Thus, the mesoporous silicate formed through surfactant templating of the silicate is characterized by an average pore diameter of at least 4 nm, a pore volume of at least 1 cm³/g, and a surface area of at least 400 m²/g; further, at least 20% of the total pore volume is due to the presence of pores ("mesopores") that are 2 nm to 50 nm in diameter. For example, the surface area is from 400 to 1500 m²/g, the pore diameter is from 4 to 50 nm, and the pore volume is from 1 to 3.5 cm³/g. In addition the mesoporous silicate formed through disordered aggregation of smectite clay interlayers is characterized by the same porosity parameters, except that the average pore diameter is at least 2 nm.

The organic polymer is preferably an engineering polymer and is selected from thermoplastic elastomers (e.g. polyolefin block copolymers, polyester-polyamide block copolymers, polyether-polyester block polymers), thermoplastic polymers (e.g. polyolefins, polycarbonates, polyacetals), and thermoset polymers (e.g. epoxy, urethane, curable elastomers, silicones, and crosslinked polymers).

In various embodiments, the mesoporous silicate is selected from the group of ordered surfactant-templated mesoporous silicates, disordered surfactant-templated mesoporous silicates, and mesoporous layered silicate clays. The latter includes smectite clays wherein the aggregation of nanolayers is disordered in edge-to-face fashion and lacks ordered face-to-face nanolayers stacking. In various embodiments, inorganic exchange cations on the smectite layers are replaced by organic onium ions.

In one embodiment, composites are manufactured by mixing together a thermoplastic polymer component (either a thermoplastic or a thermoplastic elastomer) and the mesoporous silicate, preferably above the melting or softening (T_{g}) point of the thermoplastic component in a melt-blending kind of operation. Advantageously, the method can be carried out without high levels of organic modifier and without the use of high pressure or other techniques to provide an intimate mixture.

When the polymer is a thermoset, the composites can be made by combining a pre-polymer with the mesoporous silicate, optionally in the presence of a solvent and other components such as a dispersing agent (although high levels of organic modifiers acting as a dispersing agent are not required, it may nevertheless be advantageous to provide low levels - e.g. 0.1 to 3 % - to facilitate blending). Then the solvent is optionally removed or allowed to evaporate, and the mixture of pre-polymer and mesoporous silicate is cured to form the composite. The pre-polymer is a component that will cure under the fabrication conditions to form the thermoset polymer of the composite.

Surfactant templated mesoporous silicates are prepared in the presence of surfactant micelles as mesoporogen templates that direct the assembly of the pore network. The removal of the surfactant porogens through calcination or solvent extraction affords an open mesoporous silicate with controllable mesopores sizes depending on the size of the surfactant micelles used to template the pores. Also, the surface areas of surfactant -templated mesoporous silicas that are even higher than exfoliated clays, though the particle morphology tends to be isotropic rather than 2D lamellar.

Surfactant templated silicates are said to be "ordered" or "mesostructured" if the mesopores and the mesopore walls are sufficiently regular to provide for the presence of one or more Bragg reflections in the small angle region of the X-ray powder pattern corresponding to the presence of regularly repeating basal planes greater than 2 nm apart. The presence of one or more low angle Bragg reflections means the pore size and pore walls are sufficiently regular and repeatable over distances effective in providing for Bragg scattering. That is, it is the spacing between pore walls that gives rise to small angle Bragg scattering. The pore walls do not need to be crystalline (atomically ordered) to give rise to small angle Bragg scattering; they simply need to be regular in thickness and regularly separated by pores of uniform size.

If the surfactant templated silicate does not show small angle Bragg diffraction peaks, then the mesoporous silicate is said to be "disordered" or "not mesostructured." This means that the pore size and pore wall thickness is not sufficiently regular and repeatable to give rise to low angle Bragg reflections. "Disordered" mesoporous silicates can arise through variations in the pore sizes (due to variations in the templating surfactant sizes, for example), through variations in the pore wall thickness due to inhomogeneous reaction conditions, or through variations in both pore size and pore wall thickness. Nevertheless, the pores of a disordered mesoporous silicate are far more uniform in their size distribution than other forms of mesoporous silicates such as silica gels where pore necking can limit molecular accessibility to all of the mesopore volume. The great advantage and usefulness of surfactant templated mesoporous silicates lies in the absence of pore necking on a molecular scale and the ability of molecules to readily access the pore surfaces.

Depending on the nature of the surfactant used to template a mesoporous silicate, pore networks of different symmetry and porosity parameters are possible. Ionic surfactants such as quaternary ammonium ion surfactants typically provide ordered pore networks with hexagonal or cubic symmetry as in MCM-41, MCM-48 and, occasionally, lamellar structures as in MCM-50, though the resulting average pore size and pore volume are below the values found here to be suitable for polymer reinforcement. Certain electrically neutral surfactants such as the Pluronic® di- and tri-block polyethylene oxide (PEO) and polypropylene oxide (PEO) surfactants can provide for ordered hexagonal and cubic pore networks, as in SBA-15 and SBA-11, wormhole mesopore networks as in MSU-X, as well as disordered mesocellular foam structures known as MCF and MSU-F silicas, all of which have porosity parameters within those found here to be suitable for polymer reinforcement. Electrically neutral amine surfactants typically template wormhole pore networks having suitable porosity parameters. Examples of these include HMS (an ordered structure), MSU-J (also ordered), or lamellar silicas such as MSU-G and MSU-V. Whether the pore network is ordered or disordered depends on the shape (packing parameter) of the surfactant and the reaction conditions used to form the mesoporous silicates.

In one embodiment, the composites contain a mesoporous silicate exemplified by an as-made, amine-intercalated MSU-J mesostructured silicate. These mesostructured silicates can be templated by surfactants containing polypropylene oxide chains as the hydrophobic segment and two or three amino groups as the hydrophilic head groups. The surfactants are available commercially, for example under the tradename of Jeffamine®. Advantageously, when the surfactant contains amine functionality that renders it suitable as an epoxy curing agent, the amine porogens can be left in place after synthesis of the "as-made' product and used in-situ as curing agents to form reinforced epoxy composites. Other embodiments are drawn to the use of surfactant - free mesoporous silicate (made by extracting out the porogen or by heating the as-made product to calcine the porogen) to make composites through the direct intercalation of pre-formed thermoplastic polymers or by intercalation of thermoset pre-polymers that do not function as surfactant porogens. In a non-limiting embodiment, the surfactant-free calcined version of MSU-J is formulated into an epoxy composite formulation. The three-dimensional wormhole pore network (average pore size 5.3 nm) and the high surface area (~950 m²/g) of the MSU-J silicate is shown to substantially improve the tensile properties of the polymer. Also, we report the unexpected enhancement in the oxygen permeation properties for composite compositions derived from as-made MSU-J mesostructures. The observed enhancement in oxygen permeability may find use for the design of composite membranes based on mesostructured forms of silica.

Surfactant templated mesoporous silicates having suitable porosity parameters are known in the literature, as exemplified above. A typical mesoporous silicate with a wormhole framework structure, exemplified by the known MSU-J silicate, is made by mixing Jeffamine D2000 surfactant porogen with an amount of aqueous HCl solution equivalent to the hydroxide content of the sodium silicate solution, adding a sodium silicate solution to the porogen solution, and aging the mixture at 25°C for about 20 hours. A typical reaction stoichiometry for the formation of as-made MSU-J is 1.0 SiO₂ : 0.83 NaOH : 0.125 Jeffamine D2000 : 0.83 HCl : 230 H₂O. The porogen-intercalated as-made mesostructured product is recovered by filtration and dried in air at ambient temperature. A porogen - free analog of the mesostructure is obtained by calcination of as-made MSU-J at 600°C for 4 h. The as-made and calcined forms of the mesostructures are preferably ground to a powder prior to use. Altering the reaction stoichiometry, reaction temperature, reaction time alters the porosity properties of the mesoporous silicate product.

It has been found that mesoporous silicates having suitable porosity parameters are suitable for polymer reinforcement. In a non-limiting embodiment, as-made and calcined forms of large-pore (larger than 4 nm, e.g. 5.3 nm) mesostructured silicate with a wormhole framework structure (for example MSU⁻J), are used to form rubbery epoxy mesocomposites containing 1.0-12^{%} by weight silicate. The tensile modulus, strength, toughness, and extension-at-break for the mesocomposites formed from as-made and calcined forms of MSU-J silica are systematically reinforced by up to 4.8-5.7, 1.6, and 8.5 times, respectively, in comparison to the pure epoxy polymer.

The composites represent the first examples wherein the reinforcement benefits provided by mesostructured silicate particles are comparable to those provided by exfoliated organoclay nanolayers at equivalent loadings. Moreover, the reinforcement benefits are realized without the need for organic modification of the silica surface, and the increases in tensile properties occur with little or no sacrifice in optical transparency or thermal stability.

In further illustration, the oxygen permeability of the mesocomposites prepared from as-made MSU-J silica increases dramatically at loadings ≥ 5.0% (w/w), whereas the compositions made from the calcined form of the mesostructure show no permeation dependence on silica loading. For instance, the oxygen permeability of the mesocomposites containing 12% (w/w) as-made MSU-J silica is 6-fold higher than that of the silica-free epoxy membrane. Positron annihilation lifetime spectroscopy established the absence of free volume in the mesocomposites, thus precluding the possibility of facile oxygen diffusion through the framework pores of the silica.

The increase in oxygen permeability is correlated with the partitioning of curing agent between the as-made mesostructure and the liquid prepolymer, which leads to coronas of permeable polymer with reduced chain cross-linking in the vicinity of the silica particles. Mesocomposites made from calcined forms of the mesostructured silica do not allow for curing agent partitioning, and the oxygen permeability is not significantly influenced by the silica loading.

In another aspect, we report the properties of a mesoporous synthetic clay (saponite, denoted SAP - 90) for the reinforcement of rubbery and glassy epoxy polymers. Remarkably, reinforcement properties superior to those of organo-montmorillonite can be achieved without the need for a surface organic modifier, as evidenced by the improvements in tensile strength, modulus and toughness at temperature above and below the glass transition temperature of the polymer. The disordered aggregation of clay nanolayers -50 nm or less in lateral dimension and 1 nm in thickness gives rise to aggregated tactoids with a BET surface area, average pore size, and pore volume effective for polymer reinforcement. A typical mesoporous silicate clay has a BET surface area of 920 m²/g, an average BJH pore size of 2.5 nm, and a pore volume of 1.98 cm³/g. These three porosity parameters can be adjusted upward or downward through mediation of the synthesis temperature, reaction pH, reaction time, stirring rate and the like. The unique textural properties of mesoporous layered silicate clays facilitate the dispersion of the tactoids into the polymer matrix and allow reinforcement of the polymer matrix in the absence of an organic modifier.

Thus, we disclose the properties of a synthetic mesoporous smectic clay (saponite) in disordered aggregated nanolayer form for the reinforcement of engineering polymers. The disordered aggregation of nanolayers forms a three-dimensional mesoporous structure suitable for polymer intercalation and reinforcement. Sonication of the disordered clay tactoids reduces the domain size of the aggregated platelets and facilitates the dispersion of clay particles in the polymer. Moreover, the dispersion of clay aggregates is achieved without the need for organo-modification of the clay surfaces through ion exchange with alkylammonium ions. Thus, it is possible to achieve polymer reinforcement while avoiding the plasticizing effects of the alkylammonium ions and the complications caused by Hoffman degradation of such ions at temperatures above 200°C. Nevertheless, the replacement of inorganic exchange cations on the basal planes of the mesoporous smectite clay by alkylammonium or other onium ions can be useful, particularly if a plasticizing effect on the composite is desired.

Although epoxy - clay nanocomposites have been extensively studied, improving the mechanical strength of glassy epoxy derivatives remains a challenge. We show that the synthetic mesoporous clay of the present art substantially improves the tensile properties of both rubbery and glassy epoxy matrices.

In various embodiments, methods for forming the composites are carried out advantageously without the presence of significant amounts of organic modifiers. In one embodiment, an organic prepolymer is mixed with the mesoporous silicate, optionally in the presence of a solvent or a dispersing agent to facilitate dispersion. A prepolymer is a composition capable of cure to form the final cured engineering polymer. In one embodiment, the prepolymer is a mixture of components that react with one another to form the cured polymer after the silicate is added to the prepolymer. In other embodiments, the prepolymer contains a molecular species that reacts with a curing composition added before, after, or simultaneous with the mesoporous silicate. If solvent is present, the solvent is then normally allowed to evaporate. Thereafter, the mixture made of a prepolymer and mesoporous silicate is cured to form the composite composition. In other embodiments, methods of forming the composite composition include mixing the polymer and mesoporous silicate by melt blending.

### Mesoporous Silicates

Non-limiting examples of suitable mesoporous silicate materials include mesoporous structures assembled from electrically neutral surfactant porogens. Materials having suitable porosity parameters can be prepared according to published procedures. For example, surfactant-templated lamellar silicates are described in U.S. Patent Nos. 7,132,165; 6,946,109; and 6,528,034, the disclosures of which are useful as description and are hereby incorporated by reference. Surfactant templated wormhole silicates are described in U.S. Patent Nos. 5,800,800; 5,795,559; 5,785,946; 5,672,556; and 5,622,684, the disclosures of which are useful as description and are incorporated by reference.

In other embodiments, the mesoporous silicate materials suitable for the composite compositions of the invention comprise mesoporous, mesocellular foam compositions. Suitable mesocellular foam compositions include those described in U.S. Patent Nos. 6,641,659 and 6,506,485, the disclosures of which are useful as description and are incorporated by reference.

### Compositions

In various embodiments, the weight of mass ratio of polymer to silicate in composite compositions ranges from about 99:1 to about 50:50. That is, the silicate is present at about 1 to 50 parts per 100 parts of the polymer plus silicate. In various embodiments, lower loadings of silicate are used. For example, in various embodiments, it is preferred to use from about 1 to 20 and preferably from about 1 to 10 parts of silicate per 100 parts of total polymer plus silicate in the composite compositions. In various embodiments, the mesoporous silicates are provided in as-made form, for example containing silicate material as well as the polymeric material such as porogen used in its manufacture. In other embodiments, the as-made mesoporous silicate material is calcined to remove the organic material before being used to formulate the composite compositions of the invention.

In various embodiments, compositions of the invention also contain conventional additives, such as without limitation colorants, antioxidants, fibrous reinforcing fillers, lubricants, particle dispersing agents and the like.

The invention has been described in terms of various preferred embodiments. Further non-limiting disclosure is provided in the examples that follow.

### EXAMPLES

### Example 1

This example illustrates the properties of as-made, amine surfactant -intercalated MSU-J mesostructured silica with a wormhole mesopore network for the synthesis of epoxy - silica mesocomposites. The as-made product contains the intercalated amine surfactant (Jeffamine D2000), which served as the surfactant for templating the ordered mesoporous silica, and as the cuing agent for the formation of a rubbery epoxy nanocomposite. For comparison purposes we also have used the calcined surfactant-free calcined version of MSU-J silica for epoxy composite formation. The three-dimensional wormhole (*See* J.Lee, S.Yoon, S. M.Oh, C. H.Shin, Hyeon, T. Adv. Mater. 2000, 12, 359 and J.Lee, S.Han, T.Hyeon, J. Mafer. Chem. 2004, 14, 478) pore network of MSU-J silica with an average mesopore size of 5.3 nm, a total pore volume of 1.41 cm³/g and a high surface area of 947 m²/g is shown to substantially improve the tensile properties of the polymer. Also, this example illustrates the unexpected enhancement in the oxygen permeation properties for composite compositions derived from as-made MSU-J mesostructures. The observed enhancement in oxygen permeability may find use for the design of composite membranes based on mesostructured forms of silica.

For epoxy - MSU-J composites, a pre-determined amount of as-made or calcined MSU-J silica was added to the epoxy resin and mixed at 50°C for 10 minutes. The amount of Jeffamine D2000 curing agent needed to achieve an overall NH: epoxide stoichiometry of 1:1 was then added to the mixture and mixed at 50°C for another 10 min. For composites prepared from the as-made mesostructure, the Jeffamine D2000 present in the pores of the mesostructure was counted as contributing to the curing process. The resulting suspensions were out-gassed under vacuum and transferred to an aluminum mold. Pre-curing of the nanocomposite was carried out under nitrogen gas flow at 75°C for 3 hr, followed by an additional 3 hr cure at 125°C to complete the cross-linking.

Table 1 provides the tensile, thermal stability and oxygen permeability properties of pristine epoxy polymer in comparison to the composites reinforced by mesoporous MSU-J silica. Whether or not the amine curing agent is pre-intercalated in the mesopores of the silica, substantial improvements in the modulus, strength and toughness are achieved for the MSU-J mesocomposites in comparison to the pristine polymer (c.f. Table 1). These improvements are a consequence of strong interfacial interactions and adhesion between the epoxy matrix and silica mesophase. Similar improvements in tensile moduli, strengths and strain-at-breaks have been observed for rubbery epoxy - organoclay nanocomposites (See T.Lan, T. J. Pinnavaia, Chem. Mater. 1994, 6, 2216; H. Z.Shi, T.Lan, T. J. Pinnavaia, Chem. Mater. 1996, 8, 1584; and Z. Wang, T. J.Pinnavaia, Chem. Mater. 1998, 10, 1820)

The 4 to 5.5-fold increase in modulus at 12 % (w/w) MSU-J loading is comparable to the 6-fold benefit in modulus provided by organoclay nanoparticles at an equivalent loading. It is important to note, however, that the reinforcement by mesoporous wormhole silica is provided without the need for organic modification of the silica surface. Moreover, the benefit in tensile properties occurs with little or no sacrifice in transparency. Still further, the thermal stability is improved, as judged from the higher temperature needed to induce a 1.5 % weight loss, namely, 320°C for a 12 wt% composite vs. 269°C for the pristine polymer.

**Table 1. Tensile, thermal stability and oxygen permeability properties of pristine epoxy polymer and composites made from mesoporous MSU-J silica**

| Sample | Silica loading (wt%) | Tensile modulus (MPa) | Tensile strength (MPa) | Elongation at Break (%) | Toughness (kJ/m³) | Thermal stability (°C)*^{a}* | Oxygen perm. (cc*mil/m⁻²/day⁻ 1/10²) |
|---|---|---|---|---|---|---|---|
| Pristine Polymer | 0 | 2.96 | 0.60 | 21.1 | 71 | 269 | 2.3 |
| As-made MSU-J Composite | 1 | 5.74 | 1.10 | 22.1 | 132 | | 2.4 |
| | 2 | 6.93 | 1.40 | 24.9 | 195 | | 2.3 |
| | 3 | | | | | | 2.2 |
| | 5 | 8.24 | 2.02 | 30.2 | 337 | | 9.3 |
| | 7 | 9.84 | 2.63 | 32.1 | 477 | | 12 |
| | 10 | | | | | | 12 |
| | 12 | 11.9 | 3.41 | 33.8 | 601 | 320 | 14 |
| Calcined MSU-J Composite | 1 | 6.09 | 0.98 | 20.9 | 115 | | 2.8 |
| | 2 | 5.17 | 1.01 | 25.9 | 137 | | 2.8 |
| | 3 | | | | | | 2.4 |
| | 5 | 8.37 | 1.66 | 29.5 | 259 | | 2.8 |
| | 7 | 10.2 | 2.23 | 28.8 | 331 | | 2.6 |
| | 10 | | | | | | 3.0 |
| | 12 | 14.7 | 3.42 | 29.9 | 539 | | 2.0 |

| | | | | | | | |
|---|---|---|---|---|---|---|---|
| ^{a} Temperature needed to achieve a weight loss of 1.5% | | | | | | | |

### Example 2

This example demonstrates the reinforcement of a polar thermoset polymer (an epoxy) by a surfactant-templated mesocellular foam silica, denoted MSU-F.

Mesocellular foam structures exhibit very large average cell sizes (typically 25-35 nm) and window sizes (typically 7-18 nm) and high pore volumes up to 3.5 cm³/g. Depending on the reaction conditions used to assemble the foam structure (*see* P. Schmidt-Winkel, W. W. Lukens, D. Y. Zhao, P. D. Yang, B. F Chmelka, G. D. Stucky, J. Am. Chem. Soc. 1999, 121, 254; J. S. Lettow, Y. J. Han, P. Schmidt-Winkel, P. D. Yang, D. Y. Zhao, G. D. Stucky, J. Y. Ying, Langmuir 2000, 16, 8291; and S. S. Kim, T. R. Pauly, T. J. Pinnavaia, Chem. Commun. 2000, 1661, the ratio of cell size to window size can be varied from about 1.5, corresponding to so-called "open cell forms", to larger ratios representative of so-called "closed cell" derivatives. Mesocellular foam silicas prepared from sodium silicate, denoted MSU-F, are particularly promising for polymer reinforcement, in part, because these low density forms can be readily dispersed in a polymer matrix without the need for an organic surface modifier.

An open cell mesocellular silica foam, denoted MSU-F, was assembled from sodium silicate, triblock Pluronic P123 surfactant as the structure-directing porogen and mesitylene as the co-surfactant according to previously described methods (*See* A. Karkamkar, S. S. Kim, T. J. Pinnavaia, Chem. Mater. 2003, 15, 11). Figure 1 presents the nitrogen adsorption-desorption isotherm and the pore-size distribution for the MSU-F silica after calcination at 600°C. The cell size (26.5 nm) and window size (14.9 nm) were obtained from the adsorption and desorption branches of the isotherms using the BdB-FHH2 model (*see* W. W. Lukens, P. Schmidt-Winkel, D. Y. Zhao, J. L. Feng, G. D. Stucky, Langmuir 1999, 15, 5403). Note that the pore size distribution extends beyond the 2 - 50 nm mesopore range into the macropore range, but more than 20% of the total pore volume is in the mesopore range.

The total pore volume and BET surface area 2.2 cm³/g, and 540 m²/g, respectively. Figure 2 provides transmission electron micrographs (TEM) of the foam morphology.

For the preparation of the epoxy - MSU-F composites, a pre-determined amount of calcined MSU-F silica foam was added to the epoxy resin (EPON 828) and mixed at 50°C for 10 min. A stoichiometric amount of Jeffamine D2000 curing agent was then added to the mixture and mixed at 50°C for another 10 min. The resulting suspensions were out-gassed under vacuum and transferred to an aluminum mold. Pre-curing of the mesocomposite was carried out under nitrogen gas flow at 75°C for 3 h, followed by an additional 3 h cure at 125°C to complete the cross-linking. Tensile measurements on individually molded dog bone samples were performed at ambient temperature according to ASTM standard D3039 using an SFM-20 United Testing System.

Table 2 provides the remarkable improvements in epoxy polymer tensile properties and toughness provided by MSU-F silica loadings between 1 and 9 wt %. The tensile modulus, tensile strength, strain-at-break, and toughness of the rubbery mesocomposites were systematically enhanced up to 3.7, 6.8, 2.2, and 20.6 times, respectively, at relatively low silica loading (S 9 wt%) in comparison to the silica-free polymer. The 6.8-fold increase in tensile strength is higher than the improvement provided by exfoliated organically modified montmorillonite clay-epoxy nanocomposites (5.3-fold increase) at same silica loading. Also, it is noteworthy that the despite the isotropic particle morphology of MSU-F silica, a two-fold increase in the elongation at break is observed at loadings of 3-9 wt%. This increase in elongation at break provides the added toughness to the mesocomposites.

**Table 2. Tensile and thermal properties of pristine rubbery epoxy polymer and rubbery epoxy-MSU-F mesocomposites.**

| Silica loading (wt%) | Tensile strength (MPa) | Tensile modulus (MPa) | Elongation at Break (%) | Toughness (kJ/m³) | Thermal stability (°C)*^{a}* |
|---|---|---|---|---|---|
| 0 | 0.60 | 2.96 | 21.1 | 71 | 362 |
| 1 | 0.75 | 2.99 | 36.5 | 199 | |
| 3 | 1.13 | 3.57 | 42.9 | 394 | |
| 5 | 2.14 | 6.01 | 48.2 | 839 | |
| 7 | 2.92 | 7.96 | 48.9 | 1140 | |
| 9 | 4.05 | 11.0 | 45.7 | 1460 | 362 |

| | | | | | |
|---|---|---|---|---|---|
| *^{a}* The temperatures at maximum degradation rate were determined from the first derivative of the corresponding TG curves. | | | | | |

### Example 3

This example illustrates the properties of a synthetic mesoporous layered silicate clay (saponite, a smectite clay, *see* X. Kornmann, H. Lindberg, L. A. Berglund, Polymer 42 (2001) 1303 and J. T. Kloprogge, J. Breukelaar, J. B. H. Jansen, J. W. Geus, Clays Clay Miner. 41 (1993) 103) for the reinforcement of epoxy polymers. The mesoporosity of the synthetic clay used in this example results from the disordered edge-to-face aggregation of crystalline 1-nm thick nanolayers approximately 50 nm or less in diameter without regular face-to-face stacking of the nanolayers. The nanolayers of conventional smectite clays aggregate primarily through regular face-to-face nanolayer stacking and lack the mesoporosity needed for the effective reinforcement of an engineering polymer.

The dispersion of the clay aggregates in the epoxy pre-polymer is achieved without the need for organic cation modification of the nanolayer surfaces through ion exchange with alkylammonium ions. Thus, it is possible to achieve polymer reinforcement while avoiding the plasticizing effects of the alkylammonium ions *(see* C. S. Triantafillidis, P. C. LeBaron, T. J. Pinnavaia, Chem. Mater. 14 (2002) 4088 and J. Park, S. C. Jana, Macromolecules 36 (2003) 8391) and the complications caused by Hoffman degradation of such ions at temperatures above 200°C *(see* M. Zanetti, G. Camino, P. Reichert, R. Mulhaupt, Macromol. Rapid Commun. 22 (2001) 176 and W. Xie, Z. M. Gao, W. P. Pan, D. Hunter, A. Singh, R. Vaia, Chem. Mater. 13 (2001) 2979). Nevertheless, the option of modifying the surface polarity of a mesoporous smectite clay through the replacement of inorganic exchange cations on the basal surfaces of the nanolayers remains an embodiment of this invention, in part, because it provides another useful approach to matching the polarity of the reinforcing particles to the polarity of the engineering polymer matrix in order to improve the dispersion of the particles in the matrix.

Although epoxy - clay nanocomposites have been extensively studied, improving the mechanical strength of glassy epoxy derivatives had remained an unfulfilled challenge. The synthetic mesoporous clay of this invention, however, substantially improves the tensile properties of both rubbery and glassy epoxy matrices.

Synthetic mesoporous saponite was prepared at 90°C according to previously described methods (*see* R. J. M. J. Vogels. M. J. H. V. Kerkhoffs, J. W. Geus, Stud. Surf. Sci. Catal. 91, 1153) using water glass solution (27 wt. % silica, 14 wt. % NaOH), Al(NO₃)₃·9H₂O, Mg(NO₃)₂·6H₂O and urea as the source of base in a Si : Al : Mg : urea molar ratio of 3.6 : 0.40 : 3.0 : 10 per 400 moles of water. After a crystallization period of 24 h the mixture was treated with aqueous sodium hydroxide to remove any remaining amorphous silica and to ensure the presence of sodium ions on the cation exchange sites of the clay. The as-made clay was ion exchanged with aqueous sodium chloride solution to ensure that it was in the desired sodium ion form and denoted SAP. An organic ion derivative, denoted C16-SAP, was prepared by ion exchange reaction of SAP with cetyltrimethylammonium bromide (CTAB). For comparison purposes a well-crystallized sample of saponite, denoted SAP-200°C, was obtained by increasing the synthesis temperature to 200°C *(see* J. T. Kloprogge, J. Breukelaar, J. B. H. Jansen, J. W. Geus, Clays Clay Miner. 41 (1993) 103).

The wide angle X-ray powder pattern of mesoporous saponite clay prepared at 90°C (SAP) exhibited several Bragg reflections consistent with crystalline nanolayers (Figure 3a). Included for comparison purposes in Figure 3b is the XRD pattern for a well-crystallized saponite prepared at 200°C (SAP-200°C). The 001 reflection along the platelet stacking direction was absent for SAP, indicating disordered nanolayer aggregation through face to edge interactions and the absence of regular nanolayer stacking, whereas the stacking reflection was well expressed for SAP-200°C. Thus, the SAP sample lacked regular nanolayer stacking, whereas SAP-200°C exhibited normal nanolayer stacking. Verification of the differences in layer stacking is provided by the transmission electron micrographs shown in Figure 4. A further indication of the disordered edge-face aggregation (card house arrangement) of nanolayers for SAP is provided by the large BET surface area of the clay (920 m²/g), an average BJH pore size of 5.0 nm and a pore volume of 1.98 cm³/g, as determined by nitrogen adsorption. By way of comparison, SAP-200°C had a surface area of 270 m²/g and a low pore volume of only 0.10 cm³/g. The sodium exchange form of naturally occurring sodium montmorillonite exhibited a surface area < 10 m²/g and virtually no pore volume.

Glassy and rubbery epoxies were prepared from stoichiometric amounts of EPON 826 resin and either Jeffamine D230 or Jeffamine D2000 curing agents to form glassy; and rubbery epoxy composites with glass transition temperatures above and below ambient temperature, respectively. For comparison purposes, sodium montmorillonite (NaMMT) and C16-SAP clays were also used to make glassy epoxy composites. Glassy epoxy composites were obtained by first suspending the clay in ethyl acetate and subjecting the suspension to ultrasonification for 10 min using a Branson 102C digital laboratory sonifier. The EPON resin was added to the sonified clay suspension and the mixture was stirred in a fume hood overnight and then heated at 50°C for 4 h under vacuum to complete the evaporation of solvent. Then the curing agent was added to the epoxy-clay mixture and the mixture was stirred at 75°C for 10 min, outgassed at room temperature for 20 min, and then poured into silicone molds to obtain tensile testing specimens. For comparison purposes, some glassy epoxy/clay composites were prepared without the ultra-sonication step. The composites were partially cured at 75°C for 3 h and then fully cured at 125°C for 3 h.

The tensile properties of glassy epoxy composites prepared from mesoporous SAP, non-mesoporous naturally occurring sodium montmorillonite (denoted NaMMT), and non-mesoporous SAP-200 composites are provided in Table 3. The improvement in the tensile properties for the SAP composites is correlated with the exceptional dispersion of these particles in the polymer matrix. On the other hand, NaMMT and SAP-200 exhibited poor dispersion in the epoxy matrix, and the corresponding composites exhibited mechanical properties typical of conventional composites. Although the modulus is improved with the addition of NaMMt and SAP-200, the tensile strength and elongation-at-break decreased dramatically with increasing clay loading. In contrast, the SAP composites showed improved tensile strength and elongation-at-break, in addition to improved modulus. The increase in the elongation-at-break substantially improves toughness. For example, a 45% increase in toughness was achieved at a 9.4 wt% SAP loading.

An improved storage modulus also was realized for glassy epoxy/SAP nanocomposites in comparison with the pristine epoxy (cf. Table 4). Additionally, the glass transition temperatures of the composites are comparable to the pristine epoxy. That is, the reinforcing agent does not lower the glass transition temperature of the polymer.

The onium ion modified form of the mesoporous layer silicate clay formed by ion exchange with cetyltrimethylammonium cations, denoted C16-SAP, which contains about 20 wt% organic components as determined from elemental analysis, causes the glass transition temperature of the polymer to decrease due to the plasticizing effect of the modifiers. Nevertheless, useful reinforcement of the engineering polymer was achieved.

As expected for the dispersion of rigid inorganic particles in a soft polymer matrix, far greater improvements in tensile strength, modulus and elongation-at-break were observed for rubbery epoxy/SAP nanocomposites (cf. Table 5). A 730% increase in strength, 360% increase in modulus, and 86% increase in elongation-at-break was observed at a loading of 15.0 wt% SAP.

**Table 3. Tensile properties of glassy epoxy composites reinforced by synthetic mesoporous SAP clay, non-porous sodium montmorillonite clay (NaMMT), and synthetic SAP-200 clay.**

| Clay | Clay Loading^{a} (wt%) | Tensile strength (MPa) | Tensile modulus (GPa) | Elongation-at-break (%) | Toughness (MJ/m³) |
|---|---|---|---|---|---|
| Pristine | 0.0 | 66.1 | 2.9 | 4.3 | 2.1 |
| SAP | 2.1 | 67.8 | 3.1 | 5.7 | 3.0 |
| | 5.4 | 70.2 | 3.1 | 8.9 | 4.9 |
| | 9.4 | 72.5 | 3.8 | 5.4 | 3.1 |
| NaMMT | 7.2 | 34.8 | 5.1 | 0.8 | 0.2 |
| | 12.4 | 29.4 | 5.2 | 0.6 | 0.1 |
| SAP-200 | 10 | 54.5 | 3.3 | 1.8 | 0.5 |

| | | | | | |
|---|---|---|---|---|---|
| ^{a} The clay loading is on a silicate basis; the standard deviations for all values is -3%, except for the values of elongation-at-break and toughness for the SAP composites in which case the standard deviation is -30% | | | | | |

**Table 4. Dynamic mechanical analysis (40°C) of glassy epoxy composites filled with SAP and C16-SAP clay wherein the sodium exchange cations on the basal surfaces of the clay have been replaced by organic trimethylhexadecyl-ammonium ions.**

| Clay | Loading (wt%) | T_{g} (°C) | Storage Modulus (GPa) |
|---|---|---|---|
| Pristine | 0.0 | 87.2 | 2.7 |
| SAP | 5.2 | 86.9 | 3.0 |
| | 10.3 | 87.6 | 3.3 |
| C16-SAP | 4.1 | 84.2 | 2.9 |
| | 8.6 | 84.0 | 3.2 |

**Table 5. Tensile properties of rubbery epoxy composites reinforced by SAP clay nanoparticles.**

| Clay Loading (wt%) | Tensile strength (MPa) | Tensile modulus (MPa) | Elongation-at-break (%) |
|---|---|---|---|
| 0 | 0.6 | 2.8 | 24.9 |
| 2.1 | 1.2 | 3.8 | 38.7 |
| 5.5 | 1.8 | 5.6 | 38.0 |
| 10.9 | 2.7 | 7.7 | 39.2 |
| 15.0 | 5.0 | 12.9 | 46.4 |

### Example 4

This example describes the properties of two MSU-F mesocellular foam silicas with different pore size distributions for the reinforcement of polyolefin thermoplastics. The MSU-F silicas have pore sizes greater than 20 nm and electrically neutral surfaces, making it possible to readily intercalate polymer even without surface modification of the silica or the polymer. The reinforcement of both low density polyethylene (LDPE), and high density polyethylene (HDPE) is demonstrated. The tensile strength and modulus of the composites were comparable to the best reported values for polyethylene - organo-clay nanocomposites, yet no organic compatibilizer was needed to form the MSU-F reinforced composites.

Two mesocellular foam silicas with different mesoporosity, denoted MSU-F1 and MSU-F2 and defined in Table 6, were prepared using previously described methods *(see* S. S.Kim, T. R.Pauly, T. J.Pinnavaia, Chem. Comm. 2000, 17, 1661 and Karkamkar, A.; Kim, S. S.; Pinnavaia, T. J. Chem. Mater. 2003, 15, 11-13, the disclosures of which are useful as description and are incorporated herein by reference). The surface properties of MSU-F1 and MSU-F2 were analyzed using N₂ adsorption-desorption isotherms. The isotherm curves and pore size distributions are shown in Figure 5, and the surface properties are listed in Table 7. The cell size of MSU-F1 is centered around 20 nm, and the cell sizes of MSU-F2 are centered around 60 nm over a broad range. Although the average pore size of MSU-F2 exceeds the mesopore range, at least 20% of the total pore volume occurs in the mesopore range below 50 nm. The mesocellular foam texture for both reinforcing agents is shown in the TEM images of both MSU-F1 and MSU-F2 (Figure 6).

The low density polyethylene (LDPE) and high density polyethylene (HDPE) - composites reinforced by mesocellular foam silica (MSU-F) were prepared by melt-blending. LDPE and HDPE pellets and the MSU-F silica in calcined form were oven-dried at 75°C beforehand. Desired amounts of polymer pellets and MSU-F reinforcing agent were added to a mini twin-screw laboratory extruder, and extruded at 185°C (LDPE) or 195°C (HDPE) for 10 min. The hot melt was immediately transferred to a cylinder at the same temperature as the extruder, and injected into a metal mold at 75°C to make dog-bone shaped specimens for tensile testing.

As shown by the data in Table 7 the mesocellular foam silicas provided substantial reinforcement in mechanical properties to both LDPE and HDPE. For LDPE, the addition of 8.3 wt% MSU-F1 improved the strength and modulus by 55% and 100%, respectively. As shown by the comparisons provided in Table 8, these improvements in tensile properties are comparable to or superior to improvements provided by other nanoparticles, including organoclays. The large pore sizes of MSU-F1 allow polymer intercalation inside the pores, and, consequently, provide reinforcement to the polymer. Similar improvement is achieved using MSU-F2, which has larger pore sizes than MSU-F1, indicating that a further expansion of pore sizes of the silicas has negligible effects on the reinforcement. For HDPE, the strength and modulus were improved by 40% and 60% respectively at 8.6 wt% MSU-F1 loading as well as at a low loading 4.2%.

In comparison to other inorganic filler materials used for polyethylene reinforcement, surfactant-templated large pore silicas provide several advantages. Firstly, no surface modification is necessary for the silica or the polymer; secondly, the reinforcement in mechanical properties far exceeds those of composites made from non-porous spherical silicas particles ; thirdly, due to the mesoporous structure of MSU-F, the reinforcement benefit is comparable to the some of the best reported PE - organo-clay nanocomposites ; fourthly, the isotropic nature of the MSU-F pore system eliminates the issue of particle orientation during molding, which is a common and often undesirable behavior of fibrous and platy fillers.

**Table 6: The surface properties of MSU-F1 and MSU-F2 mesocellular silica foams**

| | BET S.A (m²/g) | Cell size (nm) | Window size (nm) | Pore volume (cm³/g) |
|---|---|---|---|---|
| MSU-F1 | 544 | 22 | 11 | 2.24 |
| MSU-F2 | 410 | ~60 | 16 | 2.34 |

The relative standard deviations of BET surface areas are less than 1%.

**Table 7: The tensile properties of LDPE and HDPE - MSU-F mesocomposites.**

| | | Loading (wt%) | Tensile strength (MPa) | Tensile modulus (MPa) | Elongation at break (%) |
|---|---|---|---|---|---|
| LDPE | none | - | 14.1 | 119.7 | 104.0 |
| | MSU-F1 | 5.5 | 15.8 (+12%) | 156.8 (+31%) | 42.3 |
| | | 8.3 | 21.8 (+54%) | 240.3 (+100%) | 32.2 |
| | MSU-F2 | 3.0 | 13.7 | 164.6 | 49.5 |
| | | 7.4 | 20.3 (+44%) | 243.7 (+104%) | 41.1(-61%) |
| HDPE | none | - | 21.9 | 733 | 830 |
| | MSU-F1 | 4.2 | 26.8 (+22%) | 891 (+22%) | 670 (-20%) |
| | | 8.6 | 31.1 (+42%) | 1165 (+60%) | 28 (-96%) |

**Table 8. Thermoplastic olefin reinforcement provided by different**

| Ref # | Composite System | Filler Loading | Tensile strength (MPa) | Tensile modulus (MPa) | Elongation at Break (%) |
|---|---|---|---|---|---|
| Example 4 | LDPE | none | 14.08 | 119.7 | 104.0 |
| | MSU-F | 5.5 wt% (2.4 vol%) | 15.79 | 156.8 | 42.3 |
| | | 8.3 wt% (3.8 vol%) | 21.80 | 240.3 | 32.2 |
| | HDPE | - | 30.5 | 1076 | 600 |
| | Oriented Carbon fiber | 50 vol% | 317 | 3.1*10⁴ | - |
| | LLDPE | - | 10.4 | 74 | 34 |
| | Glass fiber | 20 wt% | 8.9 | 79 | 26 |
| | HDPE | - | 29 | 870 | 440 |
| | Silica | 0.75 vol% | 30 | 900 | 440 |
| | PBA-silica | 0.75 vol% | 29 | 1100 | 330 |
| | LLDPE | - | 11.9 | 109 | 620 |
| | Organo-clay, Graft LLDPE masterbatch | 2 wt% | 13.1 | 120 | 800 |
| | | 5 wt% | 14.3 | 150 | 920 |
| | LLDPE | - | 11.8 | 190 | >400 |
| | Organo-Clay | 5 wt% | 15.1 | 413 | >400 |
| | | 7 wt% | 15.3 | 435 | >400 |
| | Organo-clay, Graft LLDPE masterbatch | 5 wt% | 17.5 | 480 | >400 |
| | | 7 wt% | 18.8 | 569 | 221 |

### Example 5

This example describes the barrier properties provided by mesoporous layered silicate clay dispersed in a silicone thermoset polymer. In order to prepare a silicone polymer - mesoporous SAP composite, the SAP-90 form of the synthetic mineral was dispersed in ethyl acetate and the suspension was added to a PVMQ silicone pre-polymer. The mixture was blended on a Thinky planetary centrifuge. The solvent was allowed to evaporate at room temperature and the resulting mixture (containing 25 wt% SAP) was mixed with a peroxide curing agent on a two - roll mill and cured at 175°C for 15 min to provide a resin film. The cured film exhibited a helium permeability that was 10% lower than the permeability of the pure polymer.

### Example 6

This example identifies four additional surfactant-templated mesostructures suitable as polymer reinforcing agents. Each mesostructure has an average mesopore size of at least 4 nm, a specific surface area of at least 400 m²/g, and a total pore volume of at least 1 cm³/g wherein at least 20% of the total pore volume is due to the presence of mesopores 2 to 50 nm in size.
A. A mesoporous hexagonal MSU-H silica with textual mesopores and macropores (S.S.Kim et al, J. Phys. Chem. B 2001, 105, 7663) in addition to surfactant-templated framework pores as illustrated in the TEM image in Figure 7.
B. A mesocellular foam silica with wherein the average pore size is greater than 50 nm but wherein at least 20 % of the total pore volume is due to mesopores 2 to 50 nm in size, as determined from the nitrogen isotherm in Figure 8 (A.Karkamkar, Ph.D. Thesis, 2003, Michigan State University, incorporated herein by reference)
C. A lamellar mesoporous MSU-G silica with a hierarchical vesicle morphology (A. Karkamkar, et al. Adv. Func. Mater. 2004, 14(5), 507, incorporated by reference herein) as shown in the TEM image in Figure 9.
D. A wormhole mesoporous silica containing textural meso- and macropores, in addtion to framework mesopores (W. Zhang,T. R. Pauly, T. J. Pinnavaia, Chem. Mater. 9(11), 2491, the disclosure of which is incorporated by reference), as illustrated in the TEM images of Figure 10. The nitrogen isotherms of Figure 11 illustrate the mesoporosity that is useful in providing polymer reinforcement properties. Note that the 4 nm framework mesopores collapse upon calcination at 1000°C. Also, note the 4 nm framework mesopores contribute at least 20 % (~ 1 cm³/g) to the total pore volume (mesoporosity) of ~ 2.3 cm³/g.

## Claims

1. A composite composition comprising an organic polymer and a mesoporous silicate, wherein the mass ratio of polymer to silicate is between about 99:1 and about 50:50, and wherein the mesoporous silicate has a surface area of at least 400 meters square per gram, an average mesopore diameter of at least 2 nm 4, and a pore volume of at least 1.0 cubic centimeters per gram, wherein at least 20% of the total pore volume is due to the presence of mesopores 2 to 50 nm in size, wherein the mesoporous silicate is selected from a surfactant templated mesoporous silicate having an average pore diameter of 4 nm or greater and a mesoporous layered silicate clay having an average pore diameter of 2 nm or greater.

2. A composite according to claim 1, wherein the mesoporous silicate is selected from the group consisting of an ordered surfactant-templated mesoporous silicate, a disordered surfactant-templated mesoporous silicate, and a mesoporous layered silicate clay.

3. A composite according to claim 1 or claim 2, wherein the mesoporous silicate is a smectite clay wherein the aggregation of nanolayers is disordered in edge-to-face fashion and lacking ordered face-to-face nanolayers stacking.

4. A composite according to claim 3, wherein inorganic exchange cations on the smectite layers are replaced by organic onium ions.

5. The composite composition of any of claims 1-4 wherein the polymer is an engineering polymer.

6. The composite composition of claim 1 wherein the mesoporous silicate is mesostructured.

7. The composite composition of claim 1 wherein the mesoporous silicate is a mesocellular foam structure.

8. The composition of claim 1 wherein the mesoporous silicate is a layered structure.

9. The composition of claim 1 wherein the mesoporous silicate is atomically ordered.

10. The composition of any of claims 1-9, wherein the polymer is a thermoplastic polymer.

11. The composition of any of claims 1-9, wherein the polymer is a thermoset polymer.

12. The composition of any of claims 1-9, wherein the polymer is a thermoplastic elastomer

13. The composition of any of claims 1 to 9, wherein the surface area is from 400 to 1500 m²/g, the pore diameter is from 4 to 50 nm, and the pore volume is from 1 to 3.5 cm³/g.

14. A method for forming a composite according to any of claims 1-13 wherein the polymer is a thermoset polymer, the method comprising:
a) mixing a pre-polymer with the mesoporous silicate, optionally in the presence of a solvent or a dispersing agent to facilitate dispersion,
b) allowing the optional solvent to evaporate, and
c) curing the pre-polymer and mesoporous silicate mixture to form the composite composition.

15. A method for forming a composite according to any of claims 1-13 wherein the polymer is a thermoplastic, comprising melt blending the polymer and mesoporous silicate.

## Patentansprüche

1. Verbundwerkstoffzusammensetzung, umfassend ein organisches Polymer und ein mesoporöses Silikat, wobei das Massenverhältnis von Polymer zu Silikat zwischen etwa 99:1 und etwa 50:50 liegt und wobei das mesoporöse Silikat eine Oberfläche von mindestens 400 Quadratmeter pro Gramm, einen durchschnittlichen Mesoporendurchmesser von mindestens 2 nm und ein Porenvolumen von mindestens 1,0 Kubikzentimeter pro Gramm aufweist, wobei mindestens 20% des Gesamtporenvolumens auf das Vorliegen von Mesoporen mit einer Größe von 2 bis 50 nm zurückzuführen sind, wobei das mesoporöse Silikat aus einem tensidtemplatierten mesoporösen Silikat mit einem durchschnittlichen Porendurchmesser von 4 nm oder mehr und einem mesoporösen Schichtsilikat-Ton mit einem durchschnittlichen Porendurchmesser von 2 nm oder mehr ausgewählt ist.

2. Verbundwerkstoff nach Anspruch 1, wobei das mesoporöse Silikat aus der Gruppe bestehend aus einem geordneten tensidtemplatierten mesoporösen Silikat, einem ungeordneten tensidtemplatierten mesoporösen Silikat und einem mesoporösen Schichtsilikat-Ton ausgewählt ist.

3. Verbundwerkstoff nach Anspruch 1 oder Anspruch 2, wobei es sich bei dem mesoporösen Silikat um einen Smektit-Ton handelt, wobei die Nanoschichten ungeordnet in Kante-auf-Fläche-Weise aggregiert sind und keine geordnete Fläche-auf-Fläche-Stapelung von Nanoschichten vorliegt.

4. Verbundwerkstoff nach Anspruch 3, wobei die anorganischen Austauschkationen an den Smektit-Schichten durch organische Onium-Ionen ersetzt sind.

5. Verbundwerkstoffzusammensetzung nach einem der Ansprüche 1-4, wobei es sich bei dem Polymer um ein technisches Polymer handelt.

6. Verbundwerkstoffzusammensetzung nach Anspruch 1, wobei das mesoporöse Silikat mesostrukturiert ist.

7. Verbundwerkstoffzusammensetzung nach Anspruch 1, wobei es sich bei dem mesoporösen Silikat um eine mesozelluläre Schaumstoffstruktur handelt.

8. Zusammensetzung nach Anspruch 1, wobei es sich bei dem mesoporösen Silikat um eine Schichtstruktur handelt.

9. Zusammensetzung nach Anspruch 1, wobei das mesoporöse Silikat atomar geordnet ist.

10. Zusammensetzung nach einem der Ansprüche 1-9, wobei es sich bei dem Polymer um ein thermoplastisches Polymer handelt.

11. Zusammensetzung nach einem der Ansprüche 1-9, wobei es sich bei dem Polymer um ein duroplastisches Polymer handelt.

12. Zusammensetzung nach einem der Ansprüche 1-9, wobei es sich bei dem Polymer um ein thermoplastisches Elastomer handelt.

13. Zusammensetzung nach einem der Ansprüche 1 bis 9, wobei die Oberfläche 400 bis 1500 m²/g beträgt, der Porendurchmesser 4 bis 50 nm beträgt und das Porenvolumen 1 bis 3,5 cm³/g beträgt.

14. Verfahren zur Bildung eines Verbundwerkstoffs nach einem der Ansprüche 1-13, wobei es sich bei dem Polymer um ein duroplastisches Polymer handelt, wobei man bei dem Verfahren:
a) ein Prepolymer mit dem mesoporösen Silikat mischt, gegebenenfalls in Gegenwart eines Lösungsmittels oder eines Dispergiermittels zur Erleichterung der Dispergierung,
b) das fakultative Lösungsmittel Abdampfen lässt und
c) die Mischung aus dem Prepolymer und dem mesoporösen Silikat härtet, was die Verbundwerkstoffzusammensetzung ergibt.

15. Verfahren zur Bildung eines Verbundwerkstoffs nach einem der Ansprüche 1-13, wobei es sich bei dem Polymer um einen Thermoplast handelt, bei dem man das Polymer und das mesoporöse Silikat in der Schmelze mischt.

## Revendications

1. Composition composite comprenant un polymère organique et un silicate mésoporeux, dans laquelle le rapport massique du polymère au silicate se situe entre environ 99:1 et environ 50:50, et dans laquelle le silicate mésoporeux a une surface spécifique d'au moins 400 mètres carrés par gramme, un diamètre moyen de mésopores d'au moins 2 nm, et un volume de pores d'au moins 1,0 centimètre cube par gramme, au moins 20 % du volume total de pores étant dû à la présence de mésopores d'une taille de 2 à 50 nm, le silicate mésoporeux étant choisi entre un silicate mésoporeux à tensioactif structurant ayant un diamètre moyen de pores de 4 nm ou plus et une argile silicatée mésoporeuse stratifiée ayant un diamètre moyen de pores de 2 nm ou plus.

2. Composite selon la revendication 1, dans lequel le silicate mésoporeux est choisi dans le groupe constitué par un silicate mésoporeux à tensioactif structurant ordonné, un silicate mésoporeux à tensioactif structurant désordonné, et une argile silicatée mésoporeuse stratifiée.

3. Composite selon la revendication 1 ou la revendication 2, dans lequel le silicate mésoporeux est une argile smectite dans laquelle l'agrégation de nanocouches est désordonnée de manière bord à face et dépourvue d'empilement de nanocouches face à face.

4. Composite selon la revendication 3, dans lequel des cations d'échange inorganiques sur les couches de smectite sont remplacés par des ions onium organiques.

5. Composition composite selon l'une quelconque des revendications 1 à 4 dans laquelle le polymère est un polymère technique.

6. Composition composite selon la revendication 1 dans laquelle le silicate mésoporeux est mésostructuré.

7. Composition composite selon la revendication 1 dans laquelle le silicate mésoporeux est une structure de mousse mésocellulaire.

8. Composition selon la revendication 1 dans laquelle le silicate mésoporeux est une structure stratifiée.

9. Composition selon la revendication 1 dans laquelle le silicate mésoporeux est ordonné au niveau atomique.

10. Composition selon l'une quelconque des revendications 1 à 9, dans laquelle le polymère est un polymère thermoplastique.

11. Composition selon l'une quelconque des revendications 1 à 9, dans laquelle le polymère est un polymère thermodurcissable.

12. Composition selon l'une quelconque des revendications 1 à 9, dans laquelle le polymère est un élastomère thermoplastique.

13. Composition selon l'une quelconque des revendications 1 à 9, dans laquelle la surface spécifique est de 400 à 1500 m²/g, le diamètre des pores est de 4 à 50 nm, et le volume de pores est de 1 à 3,5 cm³/g.

14. Procédé de formation d'un composite selon l'une quelconque des revendications 1 à 13 dans lequel le polymère est un polymère thermodurcissable, le procédé comprenant :
a) le mélange d'un prépolymère avec le silicate mésoporeux, éventuellement en présence d'un solvant ou d'un dispersant pour faciliter la dispersion,
b) l'évaporation naturelle du solvant facultatif, et
c) le durcissement du mélange de prépolymère et de silicate mésoporeux pour former la composition composite.

15. Procédé de formation d'un composite selon l'une quelconque des revendications 1 à 13 dans lequel le polymère est un thermoplastique, comprenant le mélange à l'état fondu du polymère et du silicate mésoporeux.
